# EUROPEAN PATENT SPECIFICATION

(11) **EP 4 659 823 B1**
(45) Date of publication and mention of the grant of the patent: **10.06.2026**
(21) Application number: 24206718.9
(22) Date of filing: 15.10.2024
(51) Int. Cl.: A62C 31/22, A62C 3/07, A62C 3/16

(54) **MOTORIZED DRILL LANCE APPARATUS FOR EXTINGUISHING VEHICLE FIRES**
MOTORISIERTE BOHRLANZENVORRICHTUNG ZUM LÖSCHEN VON FAHRZEUGBRÄNDEN
LANCE DE FORAGE MOTORISÉE POUR ÉTEINDRE LES INCENDIES DE VÉHICULE

(30) Priority: 07.06.2024 KR 20240074446
(43) Date of publication of application: 10.12.2025
(73) Proprietor: Tanktech Co., Ltd., Saha-gu Busan 49454 (KR)
(72) Inventor: AN, Joo Ha, 49454 Busan (KR); KIM, Do Wan, 49454 Busan (KR); KIM, Sun Jae, 49454 Busan (KR); JI, Tae Ho, 49454 Busan (KR); KIM, Young Han, 49454 Busan (KR); KIM, Deok Won, 49454 Busan (KR)
(74) Representative: Mooser, Sebastian Thomas

(56) References cited:
- CN-A- 115 364 406
- CN-A- 116 899 144
- KR-B1- 102 633 931
- KR-B1- 102 642 042
- KR-B1- 102 709 908

## Description

### BACKGROUND

### Technical Field

The present disclosure relates to a motorized drill lance apparatus for extinguishing vehicle fires and, more particularly, to a motorized drill lance apparatus for extinguishing vehicle fires, wherein the motorized drill lance apparatus automatically drills a fire extinguishing hole in the bottom of an electric vehicle (EV) battery by using the power of a motor in the event of an EV battery fire and then injects water to swiftly extinguish the fire.

### Description of the Related Art

Recently, as the number of registered electric vehicles (EVs) in Korea is increasing, the development of safety measures in response to EV-related fires is emerging as an urgent issue as fires are frequent and cannot be extinguished easily due to the characteristics of electric vehicle batteries.

Electric cars commonly have batteries with high energy storage capacity placed at the bottom of the car body, and if the battery starts to ignite due to an accident or other various reasons, it is difficult to extinguish the fire because the temperature of the heating point is very high and continuous heat transfer occurs due to the high-density integrated form of a battery, causing re-ignition.

When a fire starts in an electric vehicle and an electric vehicle battery catches fire, extinguishing the fire is difficult and the fire easily re-ignites until the battery is completely burnt, and thus large amounts of fire extinguishing water need to be continuously injected in for a long period of time to extinguish the fire. The most effective fire extinguishing method to solve this problem would be to lift an electric car that caught fire using a crane and submerge the car in water in a water tank to extinguish the fire. However, in order to place an electric car in a water tank, the car must be lifted using a crane, etc., and a big water tank must be installed (manufactured) on site, which makes it realistically difficult to apply this method.

Currently, as the ownership rate of electric vehicles is rapidly increasing, and electric vehicles fires are also increasing, proactive response measures are needed due to the unique nature of electric vehicle fires, and technology is required to ensure the safety of firefighters and secure golden time through effective fire suppression. A known motorized drill lance apparatus is disclosed in KR 102 633 931 B1.

### SUMMARY

Accordingly, the present disclosure has been made keeping in mind the above problems occurring in the related art, and the present disclosure is intended to provide a motorized drill lance apparatus for extinguishing vehicle fires, wherein the motorized drill lance apparatus automatically drills a fire extinguishing hole in the bottom of an electric vehicle (EV) battery by using the power of a motor in the event of an EV battery fire and then injects water to swiftly extinguish the fire.

In order to achieve the above objective, according to the present invention, defined in claim 1, there is provided a motorized drill lance apparatus 100 for extinguishing vehicle fires, the apparatus 100 includes: a height-adjustable cart 110 configured to be moved to and positioned underneath an electric vehicle battery; and a drill module 120 installed on a lower side of a top plate of the height-adjustable cart 110, and configured to drill a hole into the electric vehicle battery using power of a motor while in close contact with the electric vehicle battery, and then inject water into the electric vehicle battery through the drilled hole to extinguish a fire occurring in the electric vehicle battery.

The height-adjustable cart 110 according to an embodiment of the present disclosure may include a pole handle configured to allow a height of the drill module 120 to be adjusted through clockwise or counterclockwise rotation.

The drill module 120 according to an embodiment of the present disclosure may include: a housing 121 disposed beneath the top plate and accommodating water injected from outside; a motor 122 disposed on a side of the housing 121; a first bevel gear 123 connected to the motor 122 and inserted into the housing 121 to rotate by the power of the motor 122; an inner housing 124 disposed inside the housing 121; a hole cutter 125 disposed within the inner housing 124; an elastic body 126 disposed below the hole cutter 125 and lifting the hole cutter 125 upward using elastic force; and a second bevel gear 127 with a side thereof connected to the hole cutter 125 and a side thereof engaged with the first bevel gear 123 so as to rotate the hole cutter 125 by the power of the motor 122, wherein when the hole cutter 125 is rotated by the power of the motor 122 while an upper side of the hole cutter 125 is in close contact with a bottom of the electric vehicle battery, a fire extinguishing hole for injecting the water may be drilled into the bottom of the electric vehicle battery.

Due to the elastic force of the elastic body 126 according to an embodiment of the present disclosure, the hole cutter 125 may be maintained in close contact with the bottom of the electric vehicle battery.

On a side of the hole cutter 125 according to an embodiment of the present disclosure, a compression fixing pin may be provided to maintain the elastic body 126 in a compressed state before the height-adjustable cart 110 is positioned underneath the electric vehicle battery, and when the hole cutter 125 rotates by the power of the motor 122, the compression fixing pin may be automatically separated from the hole cutter 125, so that the hole cutter 125 may come into close contact with the bottom of the electric vehicle battery.

At an upper end and a side surface portion of the hole cutter 125 according to an embodiment of the present disclosure, a fire extinguishing water discharge port may be provided for discharging the water injected into the housing 121, and the water injected into the housing 121 may be discharged through the side surface portion of the hole cutter 125 before the fire extinguishing hole is drilled in the bottom of the electric vehicle battery, and may be discharged into the electric vehicle battery through the upper end of the hole cutter 125 after the fire extinguishing hole is drilled in the bottom of the electric vehicle battery and the hole cutter 125 is inserted through the fire extinguishing hole.

According to an aspect of the present disclosure, in the event of an electric vehicle battery fire, the power of a motor is used to automatically drill a fire extinguishing hole at the bottom of an electric vehicle battery and inject water to directly cool the battery, fundamentally preventing thermal runaway and re-ignition.

In addition, according to an aspect of the present disclosure, fire extinguishing water can be drained directly to the outside by means of a hole cutter without a separate drain hole, and when the hole cutter rotates, the frictional heat of the hole cutter is removed by the extinguishing water, preventing thermal wear and blade damage.

In addition, according to an aspect of the present disclosure, since the hole cutter is operated by the power of a motor, it is possible to sufficiently drill an electric vehicle battery even if the supply pressure (water pressure) of the supplied fire extinguishing water is low, making the present disclosure applicable to existing indoor fire hydrants and water supplies.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a view showing the configuration of a motorized drill lance apparatus 100 for extinguishing vehicle fires according to an embodiment of the present disclosure;
FIG. 2 is a view showing a state in which the height of a height-adjustable cart 110 is adjusted;
FIG. 3 is a view showing a state in which a drill module 120 is installed on the lower side of the top plate of the height-adjustable cart 110;
FIG. 4 is a cross-sectional view showing the configuration of the drill module 120;
FIG. 5 is a view showing a state in which a hole cutter 125 rotates by the power of a motor 122 to drill a hole in the bottom of an electric vehicle battery; and
FIG. 6 is a view sequentially showing the process of extinguishing an electric vehicle battery fire by using the motorized drill lance apparatus 100 for extinguishing vehicle fires according to an embodiment of the present disclosure.

### DETAILED DESCRIPTION

Hereinafter, specific details for implementing the present disclosure will be described in detail with reference to the attached drawings.

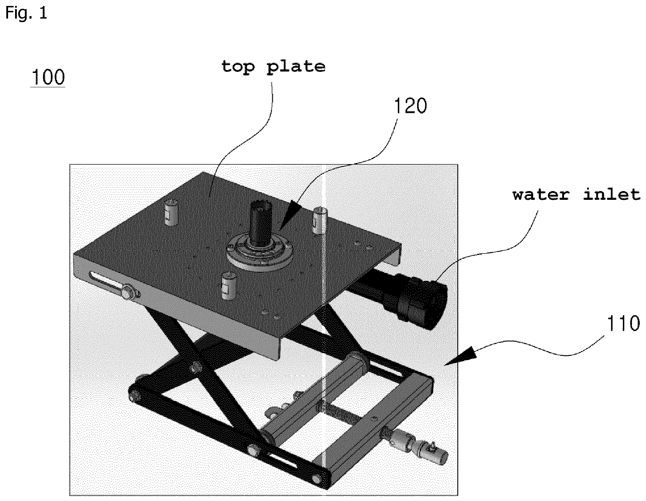

FIG. 1 is a view showing the configuration of a motorized drill lance apparatus 100 for extinguishing vehicle fires according to an embodiment of the present disclosure.

Referring to FIG. 1, the motorized drill lance apparatus 100 for extinguishing vehicle fires according to an embodiment of the present disclosure may largely include a height-adjustable cart 110 and a drill module 120.

First, the height-adjustable cart 110 is configured to move the drill module 120, which will be described later, underneath an electric vehicle battery, and may have a pole handle (not shown) connected to one side thereof. Thus, when a fire occurs in an electric vehicle, a user operates the pole handle to lower the height of the height-adjustable cart 110 as much as possible, so that the drill module 120 may be easily positioned below the electric vehicle battery, which will be described in more detail.

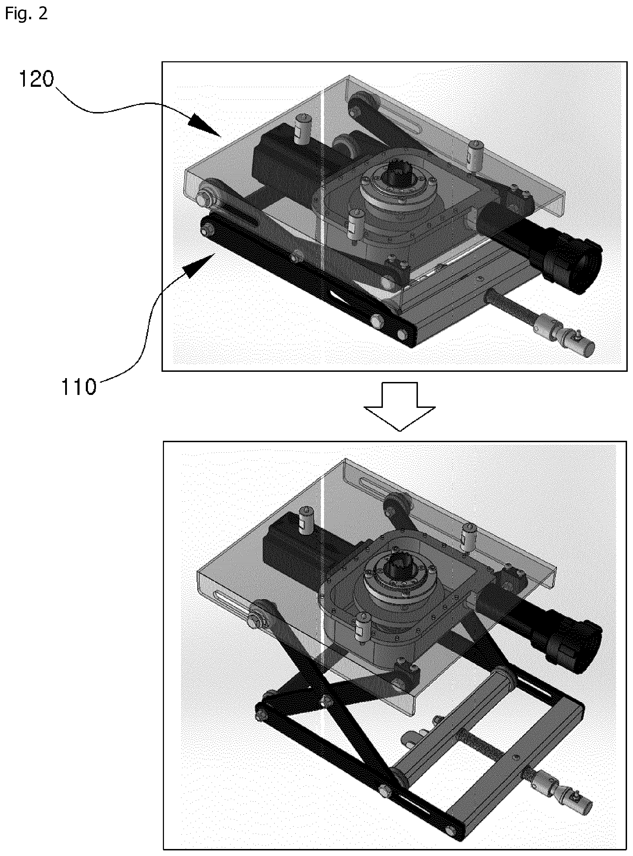

FIG. 2 is a view showing a state in which the height of a height-adjustable cart 110 is adjusted.

Referring to FIG. 2, the height-adjustable cart 110 is configured so that the top plate thereof, which is an installation surface on which the drill module 120 is installed, may be spaced from the ground by a desired height. At this time, as the pole handle rotates a length-adjusting bolt bar that crosses a pair of horizontal bars located on the lower side of the height-adjustable cart 110, the pair of horizontal bars move away from or become closer to each other. Accordingly, the height of a seating surface is adjusted up and down.

In addition, in an embodiment, the top plate of the height-adjustable cart 110 may be made of a heat-resistant material (for example, steel, etc.) to prevent shape deformation due to heat from occurring below the electric vehicle battery, where thermal runaway occurs.

The drill module 120 is fixedly installed on the lower side of the top plate of the height-adjustable cart 110 by combining a plurality of bolts, and while located below the electric vehicle battery by means of the height-adjustable cart 110, may be adjusted upward to get closer to the bottom of the electric vehicle battery as the height of the height-adjustable cart 110 is adjusted, which will be described in more detail.

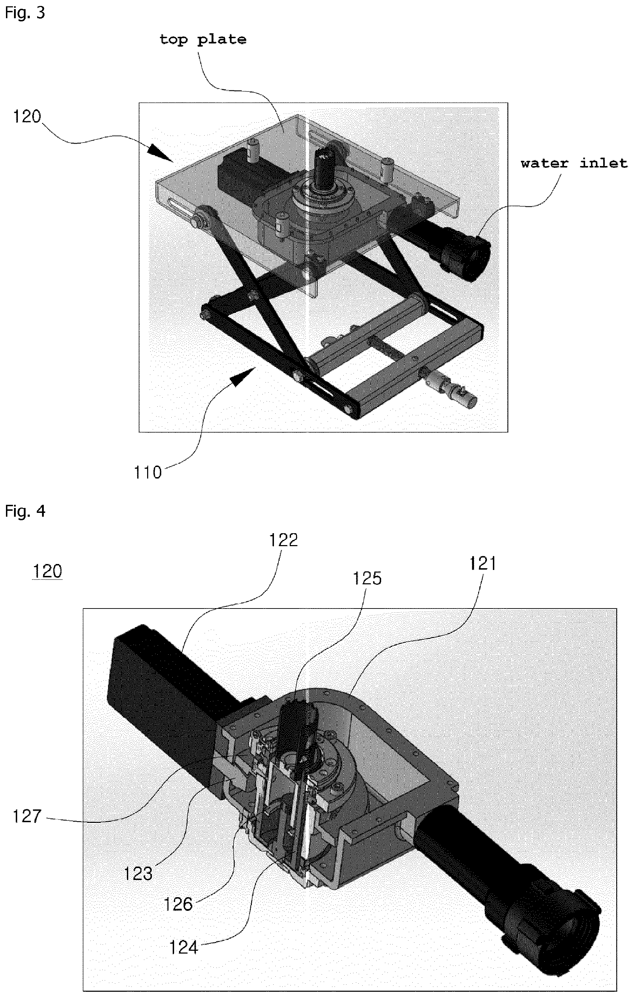

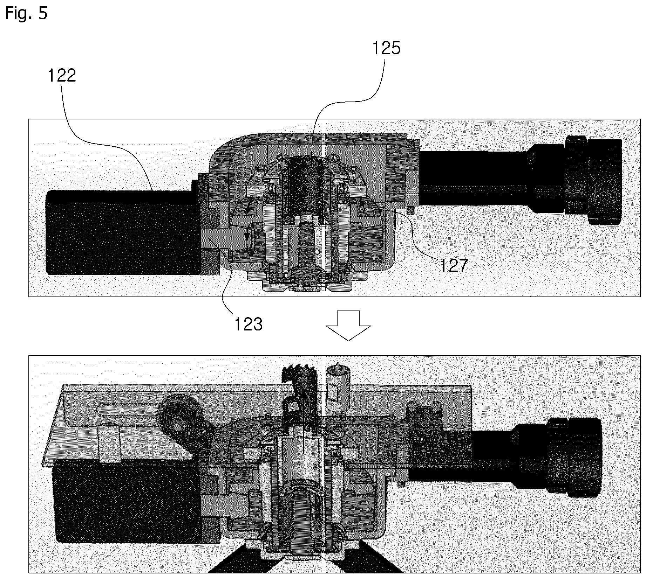

FIG. 3 is a view showing a state in which the drill module 120 is installed on the lower side of the top plate of the height-adjustable cart 110, FIG. 4 is a cross-sectional view showing the configuration of the drill module 120, and FIG. 5 is a view showing a state in which a hole cutter 125 rotates by the power of a motor 122 to drill a hole in the bottom of an electric vehicle battery.

Referring to FIGS. 3 to 5, the drill module 120 may largely include a housing 121, the motor 122, a first bevel gear 123, an inner housing 124, the hole cutter 125, an elastic body 126, and a second bevel gear 127.

First, the housing 121 is fixedly installed on the lower side of the top plate of the height-adjustable cart 110 described above by being bolted together with a plurality of bolts. The housing 121 has a water inlet on one side for injecting water from the outside, and may accommodate water injected from the outside.

Inside the housing 121, the motor 122, the first bevel gear 123, the inner housing 124, the hole cutter 125, the elastic body 126, and the second bevel gear 127, which will be described later, may be accommodated, and an internal space of sufficient size to accommodate water injected from the outside may be formed inside the housing 121.

Particularly, the drill module 120 may drill a fire extinguishing hole into the bottom of the electric vehicle battery to inject water as the hole cutter 125 rotates by the power of the motor 122 with the upper side of the hole cutter 125 in close contact with the bottom of the electric vehicle battery due to the elastic force of the elastic body 126, and water is injected into the electric vehicle battery through a drilled hole to quickly extinguish the electric vehicle battery fire.

The motor 122 is disposed on one side (e.g., the side) of the housing 121, and in this case, the first bevel gear 123 connected to the motor 122 is inserted and protrudes toward the inside of the housing 121 and rotates by the power of the motor 122.

In addition, the inner housing 124 is provided on the inner lower part of the housing 121 in an upward direction. The inner housing 124 is formed in a cylindrical shape with a hollow interior, and the hole cutter 125 and the elastic body 126 may be accommodated inside the inner housing 124.

The hole cutter 125 is accommodated inside the inner housing 124 and may be raised from the bottom to the top by the elastic force of the elastic body 126. In addition, the hole cutter 125 may be connected to the second bevel gear 127, and while rotating corresponding to the rotation of the second bevel gear 127, the hole cutter 125 drills the bottom of the electric vehicle battery to create the fire extinguishing hole.

At this time, the hole cutter 125 has a pipe shape with a hollow interior, and has a fire extinguishing water discharge port provided at the upper end and the side surface portion for discharging the water injected into the housing 121.

In an embodiment, the water injected into the housing 121 may be discharged through the fire extinguishing water discharge port formed on the side surface portion of the hole cutter 125 before the fire extinguishing hole is drilled at the bottom of the electric vehicle battery. After the fire extinguishing hole is drilled, the water may be discharged into the electric vehicle battery through the upper end of the hole cutter 125 since the hole cutter 125 is inserted into the bottom of the electric vehicle battery through the fire extinguishing hole.

The elastic body 126 is disposed below the hole cutter 125, so that the hole cutter 125 may always be in close contact with the bottom of the electric vehicle battery by the elastic force of the elastic body 126.

When the hole cutter 125 is in close contact with the bottom of the electric vehicle battery, the elastic body 126 is compressed and ensures that, due to the elastic force of the elastic body 126, the upper end of the hole cutter 125 is always in close contact with the bottom of the electric vehicle battery.

With the hole cutter 125 in close contact with the lower surface of the electric vehicle battery, the rotational force of the motor 122 is transmitted to the first bevel gear 123 and the second bevel gear 127, thereby rotating the second bevel gear 127. At this time, because the hole cutter 125 is connected to the second bevel gear 127, rotation of the second bevel gear 127 causes rotation of the hole cutter 125. Accordingly, as the fire extinguishing hole is drilled at the bottom of the electric vehicle battery, the hole cutter penetrates the bottom of the electric vehicle battery. This is possible because the elastic body 126 always pushes the hole cutter 125 toward the electric vehicle battery by elastic force.

In addition, in an embodiment, a compression fixing pin (not shown) that allows the elastic body 126 to remain compressed before the height-adjustable cart 110 is located underneath the electric vehicle battery may be provided on one side of the hole cutter 125.

The compression fixing pin remains bound to one side of the hole cutter 125 before the hole cutter 125 rotates by the power of the motor 122, and may be automatically separated from the hole cutter 125 when the motor 122 is driven and power is transmitted to the second bevel gear 127 through the first bevel gear 123 to initiate rotation of the hole cutter 125.

Meanwhile, the first bevel gear 123 may correspond to a straight bevel gear protruding from the motor 122, and the second bevel gear 127 may correspond to a circular bevel gear meshed with the first bevel gear 123.

To be specific, the second bevel gear 127 may be formed to surround the outer circumference of the inner housing 124 and may be connected to the hole cutter 125. The second bevel gear 127 is engaged with the first bevel gear 123, and when the first bevel gear 123 rotates by the power of the motor 122, the second bevel gear 127 receives the rotational force as it is and rotates together with the first bevel gear 123.

In this case, the second bevel gear 127 is connected to the hole cutter 125, and when the hole cutter 125 is raised by the elastic body 126, the second bevel gear 127 does not rise together with the hole cutter 125, but rotates together with the first bevel gear 123 while maintaining the height thereof.

In addition, in an embodiment, the motor 122 may produce power to rotate the first bevel gear 123, and any one of an electric motor, an air motor, or a hydraulic motor may be applied.

In addition, in an embodiment, the first bevel gear 123 is connected to the motor 122 and may be arranged to penetrate the side of the housing 121. At this time, to prevent fire extinguishing water from leaking to the outside through a space between the side surface portion of the first bevel gear 123 and the side surface portion of the housing 121, a sealing member (not shown) may be provided in the space between the side surface portion of the first bevel gear 123 and the side surface portion of the housing 121 to prevent the fire extinguishing water from leaking.

In addition, in an embodiment, the hole cutter 125 may have a cylindrical shape with a hollow interior. In this case, the fire extinguishing water injected into the housing 121 may be discharged directly to the outside through the hollow interior area of the hole cutter 125.

In addition, in an embodiment, the fire extinguishing water injected into the housing 121 may serve to reduce frictional heat by cooling the blade of the hole cutter 125 during the process of being discharged to the outside. This is to minimize wear caused by heat by cooling the fire extinguishing water by reducing the frictional heat generated in the process of the hole cutter 125 rotating at high speed drilling the bottom of the electric vehicle battery.

In addition, because the hole cutter 125 is able to rotate at high speed by the power of the motor 122, the hole cutter 125 may be operated without being affected by the supply pressure (water pressure) of the fire extinguishing water injected into the housing 121. Even if low-pressure water is supplied, sufficient fire extinguishing water may be injected through the hole drilled at the bottom of the electric vehicle battery. Thus, the present disclosure has the advantage of being fully applicable to existing indoor fire hydrants or water supply systems.

Next, the process of extinguishing an electric vehicle battery fire with the motorized drill lance apparatus 100 for extinguishing vehicle fires described above will be explained.

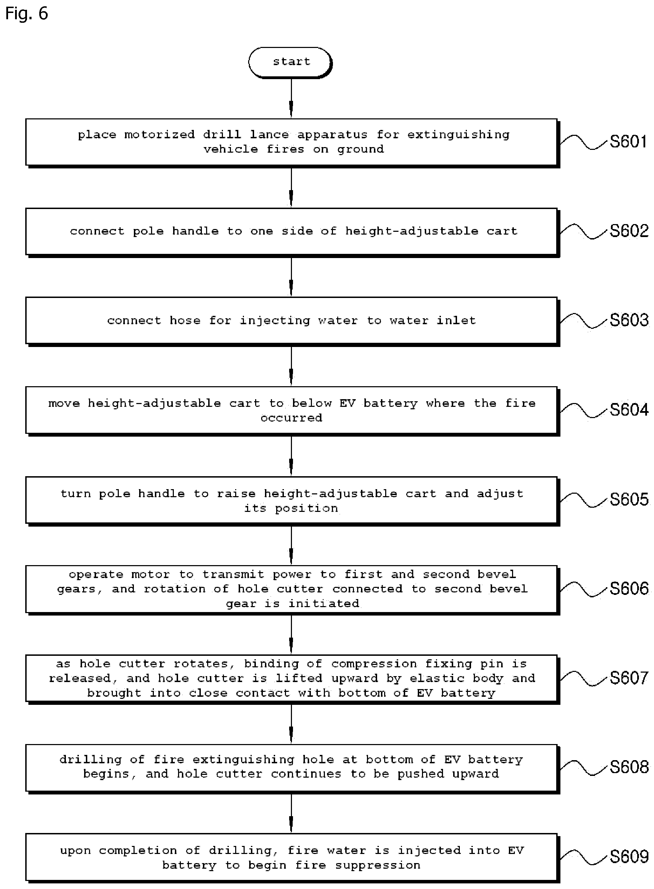

FIG. 6 is a view sequentially showing the process of extinguishing an electric vehicle battery fire by using the motorized drill lance apparatus 100 for extinguishing vehicle fires according to an embodiment of the present disclosure.

Referring to FIG. 6, first, the motorized drill lance apparatus 100 for extinguishing vehicle fires is placed on the ground (S601), and the pole handle is connected to one side of the height-adjustable cart 110 (S602).

Thereafter, a hose for injecting water is connected to a water inlet provided on one side of the housing 121 (S603), and the height-adjustable cart 110 is moved below the electric vehicle battery where the fire occurred (S604), then the position is fixed by increasing the height of the height-adjustable cart 110 by turning the pole handle (S605).

Thereafter, the motor 122 connected to one side of the housing 121 operates to transmit power to the first bevel gear 123 and the second bevel gear 127 to rotate the first bevel gear 123 and the second bevel gear 127, and the rotation of the hole cutter 125 connected to the second bevel gear 127 is initiated (S606).

As the rotation of the hole cutter 125 begins, the binding of the compression fixing pin bound to one side of the hole cutter 125 is released, and the hole cutter 125 is lifted upward by the elastic force of the elastic body 126, and the upper end of the hole cutter is brought into close contact with the bottom of the electric vehicle battery (S607).

In addition, as the power from the motor 122 continues to be transmitted, the hole cutter 125 drills a fire extinguishing hole at the bottom of the electric vehicle battery. During the fire extinguishing hole drilling process, the hole cutter 125 continues to be pushed upward by the elastic force of the elastic body 126 (S608).

Upon completion of drilling, injection is guided into the electric vehicle battery through the fire extinguishing hole (S609).

In addition, fire suppression begins as water is injected into the electric vehicle battery through the fire extinguishing hole. After the fire is extinguished, the supply of injected water is stopped, the pole handle is turned in the opposite direction, the height of the height-adjustable cart 110 is lowered to separate the cart from the fire extinguishing hole, and then the height-adjustable cart 110 is taken out from under the electric car.

As described above, according to the present disclosure, in the event of an electric vehicle battery fire, motor power is used to automatically drill a fire extinguishing hole at the bottom of an electric vehicle battery and inject water to swiftly extinguish the fire, and in particular, when connecting multiple apparatus (2 to 3 apparatus) simultaneously, the fire suppression effect may be further increased.

Although the above has been described with reference to preferred embodiments of the present disclosure, those skilled in the art will understand that various modifications and changes can be made to the present disclosure without departing from the scope of the present invention as set forth in the claims below.

## Claims

1. A motorized drill lance apparatus for extinguishing vehicle fires, the apparatus comprising:
a height-adjustable cart (110) configured to be moved to and positioned underneath an electric vehicle battery; and
a drill module (120) installed on a lower side of a top plate of the height-adjustable cart (110), and configured to drill a hole into the electric vehicle battery using power of a motor while in close contact with the electric vehicle battery, and then inject water into the electric vehicle battery through the drilled hole to extinguish a fire occurring in the electric vehicle battery.

2. The apparatus of claim 1, wherein the height-adjustable cart (110) comprises:
a pole handle configured to allow a height of the drill module (120) to be adjusted through clockwise or counterclockwise rotation.

3. The apparatus of claim 1 or 2, wherein the drill module (120) comprises:
a housing (121) disposed beneath the top plate and accommodating water injected from outside;
a motor (122) disposed on a side of the housing (121);
a first bevel gear (123) connected to the motor (122) and inserted into the housing (121) to rotate by the power of the motor (122);
an inner housing (124) disposed inside the housing (121);
a hole cutter (125) disposed within the inner housing (124);
an elastic body (126) disposed below the hole cutter (125) and lifting the hole cutter (125) upward using elastic force; and
a second bevel gear (127) with a side thereof connected to the hole cutter (125) and a side thereof engaged with the first bevel gear (123) so as to rotate the hole cutter (125) by the power of the motor (122),
wherein when the hole cutter (125) is rotated by the power of the motor (122) while an upper side of the hole cutter (125) is in close contact with a bottom of the electric vehicle battery, a fire extinguishing hole for injecting the water is drilled into the bottom of the electric vehicle battery.

4. The apparatus of claim 3, wherein due to the elastic force of the elastic body (126), the hole cutter (125) is maintained in close contact with the bottom of the electric vehicle battery.

5. The apparatus of claim 3 or 4, wherein on a side of the hole cutter (125), a compression fixing pin is provided to maintain the elastic body (126) in a compressed state before the height-adjustable cart (110) is positioned underneath the electric vehicle battery, and
when the hole cutter (125) rotates by the power of the motor (122), the compression fixing pin is automatically separated from the hole cutter (125), so that the hole cutter (125) comes into close contact with the bottom of the electric vehicle battery.

6. The apparatus of any one of claims 3 to 5, wherein at an upper end and a side surface portion of the hole cutter (125), a fire extinguishing water discharge port is provided for discharging the water injected into the housing (121), and
the water injected into the housing (121) is discharged through the side surface portion of the hole cutter (125) before the fire extinguishing hole is drilled in the bottom of the electric vehicle battery, and is discharged into the electric vehicle battery through the upper end of the hole cutter (125) after the fire extinguishing hole is drilled in the bottom of the electric vehicle battery and the hole cutter (125) is inserted through the fire extinguishing hole.

7. The apparatus of any one of claims 3 to 6, wherein the motor (122) is one of an electric motor, an air motor, or a hydraulic motor.

## Patentansprüche

1. Motorisierte Bohrlanzenvorrichtung zum Löschen von Fahrzeugbränden, wobei die Vorrichtung umfasst:
einen höhenverstellbaren Wagen (110), der so konfiguriert ist, dass er unter eine Batterie eines Elektrofahrzeugs bewegt und dort positioniert werden kann; und
ein Bohrmodul (120), das an einer Unterseite einer oberen Platte des höhenverstellbaren Wagens (110) angebracht ist und so ausgelegt ist, dass es unter engem Kontakt mit der Batterie des Elektrofahrzeugs mithilfe einer Kraft eines Motors ein Loch in die Batterie bohrt und anschließend Wasser durch das gebohrte Loch in die Batterie einspritzt, um einen in der Batterie auftretenden Brand zu löschen.

2. Vorrichtung gemäß Anspruch 1, wobei der höhenverstellbare Wagen (110) umfasst:
einen Stangengriff, der so ausgebildet ist, dass eine Höhe des Bohrmoduls (120) durch Drehen im oder gegen den Uhrzeigersinn eingestellt werden kann.

3. Vorrichtung gemäß Anspruch 1 oder 2, wobei das Bohrmodul (120) umfasst:
ein Gehäuse (121), das unterhalb der oberen Platte angeordnet ist und von außen eingespritztes Wasser aufnimmt;
einen Motor (122), der an einer Seite des Gehäuses (121) angeordnet ist;
ein erstes Kegelrad (123), das mit dem Motor (122) verbunden und in das Gehäuse (121) eingesetzt ist, um durch die Kraft des Motors (122) gedreht zu werden;
ein Innengehäuse (124), das innerhalb des Gehäuses (121) angeordnet ist;
einen Lochschneider (125), der innerhalb des Innengehäuses (124) angeordnet ist;
einen elastischen Körper (126), der unterhalb des Lochschneiders (125) angeordnet ist und den Lochschneider (125) mittels elastischer Kraft nach oben drückt; und
ein zweites Kegelrad (127), dessen eine Seite mit dem Lochschneider (125) verbunden ist und dessen andere Seite mit dem ersten Kegelrad (123) in Eingriff steht, um den Lochschneider (125) durch die Kraft des Motors (122) zu drehen,
wobei, wenn der Lochschneider (125) durch die Kraft des Motors (122) gedreht wird, während eine Oberseite des Lochschneiders (125) in engem Kontakt mit einem Boden der Batterie des Elektrofahrzeugs steht, ein Löschloch zum Einspritzen des Wassers in den Boden der Batterie des Elektrofahrzeugs gebohrt wird.

4. Vorrichtung gemäß Anspruch 3, wobei der Lochschneider (125) aufgrund der elastischen Kraft des elastischen Körpers (126) in engem Kontakt mit dem Boden der Batterie des Elektrofahrzeugs gehalten wird.

5. Vorrichtung gemäß Anspruch 3 oder 4, wobei an einer Seite des Lochschneiders (125) ein Druckbefestigungsstift vorgesehen ist, um den elastischen Körper (126) in einem zusammengedrückten Zustand zu halten, bevor der höhenverstellbare Wagen (110) unterhalb der Batterie des Elektrofahrzeugs positioniert wird, und
wenn sich der Lochschneider (125) durch die Kraft des Motors (122) dreht, der Druckbefestigungsstift automatisch vom Lochschneider (125) getrennt wird, so dass der Lochschneider (125) in engen Kontakt mit der Unterseite der Batterie des Elektrofahrzeugs kommt.

6. Vorrichtung gemäß einem der Ansprüche 3 bis 5, wobei an einem oberen Ende und einem Seitenflächenabschnitt des Lochschneiders (125) eine Löschwasserauslassöffnung zum Auslassen des in das Gehäuse (121) eingespritzten Wassers vorgesehen ist, und
das in das Gehäuse (121) eingespritzte Wasser durch den Seitenflächenabschnitt des Lochschneiders (125) ausgestoßen wird, bevor das Löschloch in den Boden der Batterie des Elektrofahrzeugs gebohrt wird, und in die Batterie des Elektrofahrzeugs durch das obere Ende des Lochschneiders (125) ausgestoßen wird, nachdem das Löschloch in den Boden der Batterie des Elektrofahrzeugs gebohrt wurde und der Lochschneider (125) durch das Löschloch eingeführt wurde.

7. Vorrichtung gemäß einem der Ansprüche 3 bis 6, wobei der Motor (122) ein Elektromotor, ein Luftmotor oder ein Hydraulikmotor ist.

## Revendications

1. Appareil formant lance de forage motorisée destiné à éteindre les incendies de véhicules, ledit appareil comprenant:
un chariot réglable en hauteur (110) conçu pour être déplacé et positionné sous la batterie d'un véhicule électrique; et
un module de forage (120) installé sur la face inférieure d'une plaque supérieure du chariot réglable en hauteur (110), et conçu pour percer un trou dans la batterie du véhicule électrique à l'aide de la puissance d'un moteur tout en étant en contact étroit avec la batterie du véhicule électrique, puis pour injecter de l'eau dans la batterie du véhicule électrique par le trou percé afin d'éteindre un incendie qui s'est déclaré dans la batterie du véhicule électrique.

2. Appareil selon la revendication 1, dans lequel le chariot réglable en hauteur (110) comprend:
une perche télescopique conçue pour permettre de régler la hauteur du module de forage (120) par une rotation dans le sens horaire ou antihoraire.

3. Appareil selon la revendication 1 ou 2, dans lequel le module de forage (120) comprend:
un boîtier (121) disposé sous la plaque supérieure et destiné à recevoir l'eau injectée depuis l'extérieur;
un moteur (122) disposé sur une face du boîtier (121);
une première roue conique (123) reliée au moteur (122) et montée sur le boîtier (121) de manière à tourner sous l'effet de la puissance du moteur (122);
un boîtier intérieur (124) disposé à l'intérieur du boîtier (121);
une scie-cloche (125) disposée à l'intérieur du boîtier intérieur (124);
un élément élastique (126) disposé sous la scie-cloche (125) et soulevant la scie-cloche (125) vers le haut grâce à sa force élastique; et
une deuxième roue conique (127) dont un côté est relié à la scie-cloche (125) et dont l'autre côté est en prise avec la première roue conique (123) de manière à faire tourner la scie-cloche (125) grâce à la puissance du moteur (122),
dans lequel, lorsque la scie-cloche (125) est entraînée en rotation par le moteur (122) tandis que la face supérieure de la scie-cloche (125) est en contact étroit avec le fond de la batterie du véhicule électrique, un orifice d'extinction d'incendie destiné à l'injection d'eau est percé dans le fond de la batterie du véhicule électrique.

4. Appareil selon la revendication 3, dans lequel, grâce à la force élastique du corps élastique (126), la scie-cloche (125) est maintenue en contact étroit avec le fond de la batterie du véhicule électrique.

5. Appareil selon la revendication 3 ou 4, dans lequel, sur une face de la scie-cloche (125), une goupille de fixation par compression sert à maintenir le corps élastique (126) à l'état comprimé avant que le chariot réglable en hauteur (110) ne soit positionné sous la batterie du véhicule électrique, et
lorsque la scie-cloche (125) tourne sous l'effet de la puissance du moteur (122), la goupille de fixation par compression se détache automatiquement de la scie-cloche (125), de sorte que la scie-cloche (125) vienne en contact étroit avec le fond de la batterie du véhicule électrique.

6. Appareil selon l'une quelconque des revendications 3 à 5, dans lequel, à l'extrémité supérieure et sur une partie de la surface latérale de la scie-cloche(125), est pratiqué un orifice d'évacuation d'eau d'extinction d'incendie destiné à évacuer l'eau injectée dans le boîtier (121), et
l'eau injectée dans le boîtier (121) est évacuée par la partie de surface latérale de la scie-cloche (125) avant que l'orifice d'extinction d'incendie ne soit percé dans le fond de la batterie du véhicule électrique, puis est injectée dans la batterie du véhicule électrique par l'extrémité supérieure de la scie-cloche (125) une fois que l'orifice d'extinction d'incendie a été percé dans le fond de la batterie du véhicule électrique et que la scie-cloche (125) a été inséré à travers le trou d'extinction d'incendie.

7. Appareil selon l'une quelconque des revendications 3 à 6, dans lequel le moteur (122) est un moteur électrique, un moteur pneumatique ou un moteur hydraulique.
